# EUROPEAN PATENT APPLICATION

(11) **EP 1 055 513 A1**
(43) Date of publication of application: **29.11.2000**
(21) Application number: 99304120.1
(22) Date of filing: 27.05.1999
(51) Int. Cl.: B32B 27/00, E04B 1/94

(54) **Pre-preg and panel structure**

(71) Applicant: HEXCEL CORPORATION, Pleasanton, CA 94588-8781 (US)
(72) Inventor: Green, George Edward, Stapleford, Cambs CB2 5BZ (GB); Blair, Dana, Hardwick, Cambs CB3 7XU (GB)
(74) Representative: Baillie, Iain Cameron

(57) **Abstract**

A pre-preg or a laminate, particularly a composite honeycomb panel laminate (8), in which the surface ply comprises a ply (1,2) wherein the resin adjacent to the center of the laminate is a thermosetting resin containing dissolved therein a thermoplastic resin and on the outer surface of the pre-preg distant from the center of the laminate there are provided two different fire retardant materials in which the two materials are in predominantly distinguishable resin layers (5,6).

## Description

This invention relates to a pre-preg layer, particularly for use in the manufacture of composite panel structures comprising honeycomb cores but also for use in manufacturing monolithic multiple ply laminates, which laminates are used in an environment requiring fire or flame resistance or fire protection. The method of producing such structures is also included in the invention.

Standard low FST (flame, smoke and toxicity) composite panel structures are normally made of prepreg skins bonded to a honeycomb core. The honeycomb core can be of a material such as aramid (eg. Nomex®) while the facing prepreg sheets can be fibers bonded with phenolic resins thereto. The core can be treated with a flame resistant material to impart improved flame resistance and to reduce heat transmission and toxic emissions upon exposure of the core to direct or indirect heat, flame and/or a pyrolytic environment. The use of a honeycomb core combined with rigid skin panels forms a sandwich structure providing semi-structural strength. Composite panel structures of this type are described in US Patents 5,106,668, 4,937,125, 4,956,217 and 5,460,865.

A composite sandwich panel structure having first and second honeycomb core layers and forming facing skins in which prepregs are used is described in US Patent 5,460,865. A composite, lightweight, fire-retardant laminar structural panel having a honeycomb core and facing sheets formed from lightweight fibrous materials impregnated with phenolic resins is described in US Patent 4,557,961.

Composite honeycomb structures such as those described in US Patents 4,557,961 and 5,460,865 have many applications but are very suitable for use in panels designed for use in environments requiring fire or flame resistance, or fire protection. They are particularly suitable for use in aircraft interior applications including floors, ceilings, overhead bins and doors.

Composite panel structures used in aircraft side walls, overhead bins and ceilings are almost entirely based on phenolic resin technology. The phenolic resin gives acceptable FST but is marginal in adhesive properties as measured, for example, by a peel test. However, the poorer mechanical performance can be accommodated as these components are not subject to heavy loads.

These phenolic resins will also burn and smoke when exposed to flames. Such resins are often used together with various additives which impart flexibility to the structures. These additives, such as nylon or rubber, can themselves form additional fuel sources which will promote the burning and smoking of a prepreg composite when it is subjected to combustion conditions.

However, floor panels have to withstand considerable wear and tear and therefore structural integrity is very important. This has led to a greater use of epoxy adhesive systems to improve the mechanical strength of the panels.

However, the epoxy resins when exposed to flames will burn and produce smoke, conditions that are undesirable for safety reasons. Attempts to improve this situation and to impart a self-extinguishing/low flammability property to the epoxy resins used in the structures have been made by halogenating the epoxy resins. However, bromination of an epoxy resin can lead to increased levels of smoke production when composites are exposed to flames.

There is a need to develop composite panel structures which can be used as panels for the aircraft industry which are lightweight, tough and inexpensive and which can satisfy regulatory requirements such as those of the US Federal Aviation Authority (FAA) regarding interior flammability requirements of low heat release and low smoke density during combustion. Although panels having suitable properties are presently available, it is desirable that further improved panels are developed.

A useful measurement of flammability requirements is the Ohio State University (OSU) heat release test described in "Heat Release in Fires" edited by V. Babrauskas and S.J. Grayson; Elsevier Applied Science, Pages 13-17, 1st Edition 1992. This measures heat release for the duration of the test from the moment the specimen is injected into a controlled exposure chamber and encompasses the period of ignition and progressive flame involvement of the surface of the specimen. The measurement tests peak heat release rate and total heat release rate (ie. the rate at which heat energy is evolved by a material when burned measured in power per unit area (kilowatts per square meter (kW/m²)).

A legal requirement of current aircraft regulations is a maximum level for OSU of 65/65. Decorative facings on structural materials increase FST values and therefore a composite structure must compensate for this by even lower OSU values. Current structures are about 40/40.

There is a need for a ply which combines improved adhesiveness to the core of the composite structure with increased fire resistance. The employment of thermosetting resins containing thermoplastic resins is known to enhance adhesiveness but usually results in decreased FST properties. A pre-preg to be used in forming such a composite structure can also be used in forming monolithic multiple ply laminates without cores.

According to the present invention there is provided a pre-preg ply which comprises a fibrous sheet impregnated with a thermosetting resin, a layer of a fire retardant material disposed adjacent to one surface of the sheet, and a layer of a second and different fire retardant material the bulk of which layer is distinguishable from the first fire retardant.

There is also provided a multiple ply panel structure which comprises at least one cured pre-preg ply, the surface of the pre-preg ply bearing the fire resistant material being an outward layer of the laminate.

The invention has as one embodiment a composite panel structure which comprises in combination a cellular core sheet and on at least one side of said core sheet a ply derived from a ply as defined above.

The invention further includes a method of forming a laminate structure which comprises applying to centre core sheet a pre-preg ply in which the inner surface comprises a thermosetting resin containing dissolved therein a thermoplastic resin, the resin content being greater than the amount on the other surface of the ply in grams per square meter (gsm), the ratio of the two amounts being in the range 1.00 to 2.00, there being provided on the outermost surface of the ply two different fire retardant materials in structurally distinguishable layers.

In a further embodiment of the invention there is provided a composite panel structure which comprises in combination a porous core sheet material and on one face of the core a resin impregnated ply characterised in that the amount of resin between the ply and the core is an amount of resin which is greater than the amount of resin on the outer surface of the ply, the ratio of the amounts applied to the inner and outer surfaces being the range 1.00 to 2.00 and the structure achieving in the Ohio State University (OSU) heat release test a value not exceeding 20/20 units.

The measurement of OSU for the purpose of those embodiments of the invention which define a structure having an OSU heat release test is on panels not bearing decorative facings.

The best materials available presently on the market to enhance FST are halogenated systems. These systems can ensure good heat release values but they can have an environmental and toxicological impact because of the halogen content. International bodies, such as United Nations and World Health Organisations, concerned with the environmental health impact of chemicals, have undertaken an extensive survey of halogen based fire retardants. These trends will lead to the reduction of the utilisation of halogen-based fire retardant systems, because of the negative side effects which they may produce during the entire life cycle. For example, increase of formation of obscuring, corrosive and toxic smoke occurs when they perform their fire retardant action. Investigations are in progress which lead towards inorganic systems. These systems can offer excellent heat release properties without being toxic, but they have proved to be very difficult to process. In comparison with the systems described previously, the system of the invention can provide a halogen free system which is easy to process using conventional methods.

The composite panel structure of the invention may have as a core a simple structure having a honeycomb, preferably hexagonal, core with facing sheets comprising prepregs which form fire barrier membranes and are disposed over the open cells of the honeycomb.

The core can be formed from aramid paper cores, calendared kraft paper cores including blends and glassine materials, flame retardant phenolic foam cores and metallic cores including aluminum foam filled cores.

A wide variety of alternative more sophisticated structures are also possible including structures such as those described in US Patent 5,460,865 which have a plurality, preferably two, of honeycomb layers separated by barrier membranes and having facing layers outside the core. The composite panel structure of the invention may have a plurality of honeycomb core layers and a plurality of fire barrier membranes disposed both between the honeycomb core layers as a septum and outside the core layers as facing sheets.

The fire barrier membranes, particularly the septum, may comprise a layer of inorganic fibre membrane or inorganic paper or a layer of vermiculite film or both a layer of inorganic fibre membrane or vermiculite film.

The septum layer of inorganic fibre membrane and/or vermiculite film preferably has a layer of phenolic prepreg on both sides thereof, adjacent the honeycomb core layers. Further, the layer of inorganic paper provided together with the layer of vermiculite film may also have a layer of prepreg therebetween. Preferably the layer of vermiculite film comprises 30-100% vermiculite and 0-60% carrier, the carrier being a glass or quartz fabric or mat or other low or non-flammable support.

In a preferred form of the composite panel structures of US Patent 5,460,865 when it is used in the present invention, two honeycomb core layers are provided with a center septum therebetween made of inorganic fibre membrane or paper. The facing sheets outside the honeycomb core comprise outer skins and a layer of phenolic prepreg. The outer skins are preferably vermiculite film. The layer of phenolic prepreg is provided between each vermiculite film layer and the respective honeycomb core and on both sides of the inorganic paper used as the central septum.

In the structures of the invention the honeycomb core layers preferably comprise cores having a thickness of 3 to 250 mm, cell size of 3-13 mm and a density of 29 Kg/m³ to 144 Kg/m³.

The prepreg used in composite structure is a combination of a substrate, usually a fibrous substrate, and a resin, usually a thermosetting resin. A wide variety of materials may be used as the substrate including mats, fabrics, papers and non-woven materials. Thus there is usable in the invention a wide variety of fabric materials including those made from organic fibers and fibers such as fiber glass. The resin is usually a thermosetting resin which can be advanced to a B cure stage. In the cure cycle of a thermosetting resin, an A stage refers to the early stage in the reaction of the resin in which the resin is still soluble and fusible. A B stage is an intermediate stage in the reaction in which the thermosetting resin melt is being heated and still dissolves in certain solvents. In production, the treated substrate can be precured to this stage to facilitate handling and processing prior to the final cure. A C stage is the final stage in curing the thermosetting resin in which the resin becomes infusible and insoluble in common solvents.

For one embodiment of the invention in the prepreg the substrate may comprise a single sheet of material or may comprise a plurality of sheets. The resin is coated onto the surfaces of the individual sheets although, if required, individual surfaces may remain uncoated. However, the prepreg sheets must have at least two surfaces coated with resin in which the weight per area of the coatings are in the ratio specified.

In the second embodiment the two fire-retardant materials are disposed in separate layers preferably on non-adjacent surfaces.

Suitably the resin in the prepreg is a thermosetting resin with thermoset phenol formaldehyde resins being preferred. Suitable phenolic resins include: resole, novolac, cresol and xylenol resins. Novolacs and resoles are phenol formaldehyde resins. Novolacs are prepared by reacting excess phenol with formaldehyde in the presence of acid catalysts. Resole prepolymers are the reaction products of phenol and a molar excess of formaldehyde under alkaline conditions. The compositions of resoles are governed by initial phenol formaldehyde ratios, the type of base catalyst and the reaction conditions used. It is usual to adjust the resin viscosity by addition of solvents such as water or alcohol.

Resins which can be used also include combinations of thermosetting, particularly phenolic resins and thermoplastic resins. Suitable thermoplastic resins include polyvinyl butyral; copolymer of polyvinyl butyral with one or more of polyvinyl alcohol or polyvinyl acetate (for example, those sold under the trademark BUTVAR®); a thermoplastic polyurethane such as ESTANE®; a phenoxy resin (for example those sold under the commercial name PAPHEN®); polyethylene vinyl acetate (for example those sold under the commercial name ELVAX®), or a polyether sulfone.

The thermoplastic resins should be soluble or dispersible in the thermosetting resin. It is known to include distinguishable particles of thermoplastic resins into thermosetting resins for formation of pre-preg plies but in the present invention the thermoplastic resin is not distinguishable from the thermosetting resin. Those skilled in the art will be readily able to determine from the known properties of thermosetting and thermoplastic resins those resins which would comply with these requirements, particularly in the light of the embodiments of the present invention.

The disposition of the layers of fire retardant material in relation to the plies can of course be changed. Thus outermost of a laminate having two plies there could be provided fire thermo-barrier material and in between the two plies the thermo-barrier material could be innermost and the intumescent material outermost or vice versa.

In one embodiment of the invention the amounts of resin applied to two different and opposed surfaces differ from one another, the resins being applied to one surface at from 80 gsm and 250 gsm and to the other surface at from 160 gsm and 310 gsm giving a range of ratios of from 1.00 to 3.00. Normally the prepreg will be impregnated with the resin to give a resin content of from 38 to 44% by weight, ie. 180-230 gsm but the manner of impregnation can be adjusted so as to result in a greater content of resin on one surface than on the other. When the prepreg is present in the composite structure of the invention, the surface with the greater amount of resin is the surface adjacent to or nearer to the honeycomb core whilst the other surface is closer to or forms part of a facing sheet of the structure.

In this embodiment it is a particular feature of the invention that the resin applied to one surface preferably differs from that applied to the other surface. When different resins are applied to the different surfaces as in this particular feature, suitable resins for one surface include a resole or a novolac while suitable resins for the other surface include a resole, a novolac, a resole formaldehyde resin or a xylenol resin. By way of example the resin applied to the inner surface may be a combination of a phenolic resin and a thermoplastic resin while the resin applied to the other surface may be a simple conventional phenolic resin.

The concept of applying an imbalance in the amount of resin on the two surfaces of an inner sheet in a prepreg as in the first embodiment of the invention has general applicability in the manufacture of prepregs and has been found to give superior results in terms of adhesion.

The total resin content of a particular ply when formed as a pre-preg will be within the conventional range of 38-44% by weight. The variation then is in the amount of resin on each side of the ply. For example, on one side will be 60-120 gsm and on the other side between 120 and 180 gsm.

In stating the content of thermoplastic resin, this can be 8-20% by weight of the resin at the relevant surface.

The composite structure of the invention contains one or more fire-retardant agents particularly two different fire-retardant agents. Preferably the fire-retardant agent applied to one surface, preferably one more distant from the core, is an intumescent flame retardant such as a polyphosphate. The second fire retardant agent applied elsewhere in this embodiment is different and can be for example a thermal barrier material such as a blend of silica powder materials of the type known as "Ceepree". Generally there will be no flame retardant material in the layer of resin between a ply and the surface to which the ply is applied, particularly a core as this would interfere with the adhesive bonding.

The second aspect of the invention may be illustrated by reference to a prepreg having two sheets of fibrous composite material as its substrate. The prepreg is to be used with a honeycomb core in the composite structure of the invention. Firstly in this two sheet substrate, the outermost surface of the outer sheet contains an intumescent fire retardant such as a polyphosphate. This fire retardant can also be applied to the inner surface of this outermost sheet. On the outer surface of the inner sheet there is provided as a different fire retardant a thermal barrier material which can be a blend of silica powder materials of the type known as "Ceepree". The inner or core adjacent surface of the inner sheet has a higher resin coating particularly a phenolic resin coating and is free of fire retardant material. In the illustration the resin coating applied to the inner surface of the ply adjacent the core could be a thicker (heavier) coating than that applied to the outer surface of the ply.

In the placing of the fire retardant layers this should be as near the outer surface of the construction as possible since they are to protect the adhesive layers.

Since in the present invention the amount of fire retardant is high, one wishes to separate the two types of fire retardant so as to avoid interference with adhesivity of the resin.

Desirably the barrier material should be as close to the core as possible.

The essence of the invention is to employ as high an amount of flame retardant as possible but in separate "layers".

Although the invention has been discussed specifically in relation to two ply materials for composite structures, the invention could be applied to greater numbers of plies although this might be disadvantageous because of the resulting effect on weight.

In the above illustration it may be noted that, whilst a fire retardant agent is present only on one of the first and second surfaces, there are two fire retardant agents present in the prepreg. In the second embodiment of the invention the prepreg contains a plurality of different fire retardant agents.

Where there is applied to the surface of the ply the two different fire retardant agents then usually one agent will be applied directly to the resin on the surface of the ply and a separate resin film containing the other agent will be then applied over that surface. During the formation of the final laminate, heat and pressure may result in some degree of intermingling of the two fire retardant materials but by following a procedure in which they are initially separate it will be possible to determine from the structure that the two materials were initially separate and are still distinguishable, ie. there will be a greater content of one fire retardant material in one layer of the resin as compared to the content in the remainder of the resin layer.

In addition to the fire retardant agents mentioned above, other fire retardant agents which may be used include:
(a) intumescent agents such as melamine monophosphate; ammonium polyphosphate, microencapsulated with melamine-formaldehyde resin; halogen-free phosphorus polyol; ammonium polyphosphate with phosphorus/nitrogen synergism; diphenyl cresyl phosphate; tricresyl phosphate; triphenyl phosphate; trixylenyl phosphate eg. Antiblaze which is a tradename for a low molecular weight flame retardant; and
(b) thermal barrier materials such as vermiculite; deshotted mineral fibers (for example those sold under the commercial name INORPHIL®); hollow silica spheres (for example those sold under the commercial name FILLITE®); mica.

The resins could also include flame retardant epoxy materials such as cyanate epoxies or polyether amides or benzoxazines and there could be included into the resins polyesters, polyvinylesters etc. Inclusion of these other types of resin materials could affect the amounts of resin on each surface of the relevant plies.

The fire retardant formulations can be applied to the surfaces, ie. in the prepreg, by any suitable means particularly by coating or by impregnating the substrate. The formulations used to produce the first and second surface contain flame retardants in the range of 10 to 50% by weight of formulation.

In addition to the resin and the fire retardant agents, other materials can be used in these formulations for example fumed silica as a thickener (a thixotropic agent, for example CAB-O-SIL®). Alternatives to fumed silica are modified bentonite clays and gel All-D(dibenzylidene sorbitol).

The composite panel structures of the invention are designed to achieve high performance in the Ohio State University (OSU) heat release test with values not exceeding 20/20 units and preferably with values not exceeding 10/10. Panels currently in use have values in this test of the order of 45/45.

The OSU test is an accepted test described in FAR 25.853 (A-1) Appendix F Part 25 and recognised by the FAA. It measures the total heat release rate in 2 minutes (kW min/m²) and the peak of heat release (kW/m²).

The composite panel structures of the invention were also subjected to the climbing drum peel test for adhesives - ASTM Designation: D 1781-76 (Reapproved 1986). This test covers the determination of the peel resistance of adhesive bonds between a relatively flexible adherand and a rigid adherand; and the relatively flexible facing of a sandwich structure and its core, when tested under specified conditions. Under this test the invention had peel strengths generally in the range 130 to 180 N/76 mm. Values up to 232.5 N/76 mm were recorded.

The composite structure of the invention may be a simple structure having a honeycomb, preferably hexagonal, core with facing sheets comprising prepregs according to the invention on either side of the core.

A wide variety of alternative more sophisticated structures are also possible including structures such as those described in US Patent 5,460,864. The structures of US Patent 5,460,864 have first and second honeycomb core layers separated by barrier membranes and having facing layers outside the core. The barrier membranes and the facing layers can comprise prepregs according to the invention. The composite structure of the invention may also be employed in many other ways including structures such as those described in US Patent 4,557,961.

In the composite structures of the invention the prepregs of the invention will generally form part of the facing sheets on either side of the honeycomb core. When the prepreg is used in this way, the first outer surface to which the greater amount of resin is applied will usually be that surface facing towards the core of the structure.

The composite structures of the invention have many uses in situations where fire retardant panels are required. They are however particularly useful in the aircraft industry where they can be used in the fabrication of aircraft interior non-structural components, such as floors, ceilings, overhead bins and doors. The invention can be used to provide panels which are lightweight, tough and inexpensive and which can satisfy US Federal Aviation Authority (FAA) requirements of low heat release and low smoke density during combustion. This invention provides panels having symmetrical and asymmetrical layers.

The invention is illustrated by the accompanying drawing which is an exploded view of a simple honeycomb structure according to the invention; and

A more complex composite sandwich panel structure with first and second honeycomb core layers and fire barrier membranes separating the honeycomb core layers as described in US Patent 5,460,865 using the embodiments of the present invention in the facing skins and barrier layers.

The embodiment of the invention relating to pre-preg ply or a monolithic laminate resulting from the use of said ply could be employed in structures where the strength of the core is not required but the result would still give greater adhesiveness of the ply to the supporting structure together with increased fire retardants.

Aspects of the invention will be illustrated with reference to the drawings showing a composite (cellular core centered).

The structure shown in the drawing has a honeycomb core 8 having upper and lower facing sheets. Facing sheet 1,2 on one side of the core 8 (which could be the upper surface of a floor) comprises a prepreg formed from two layers inner and other of substrate material 1 and 2. On the other surface of the core is a facing sheet 3 similar to upper facing sheet 1,2 and comprises two similar layers of substrate material both numbered 3. Facing sheet 1,2 will be described in detail.

In the plies the direction of the fibers may be varied to meet the design requirements pursuant to considerations which are known in the art.

The facing sheet comprises a prepreg having two substrate layers 1 and 2 formed from phenolic resins and same flame retardant. Outer layer 1 has outer and inner surfaces 4 and 5. Inner layer 2 has outer and inner surfaces 6 and 7. Surfaces 4, 5 and 6 are coated with the same phenolic resin. Surface 7 has a different resin system. The weights of resin per unit area of each surface being as follows:
- Surface 4: - 123 gsm
- Surface 5: - 123 gsm
- Surface 6: - 50-130 gsm
- Surface 7: - 120-200 gsm

Fire retardant agents are present in the coatings on the surfaces as follows:-
- Surface 5: - Intumescent flame retardant
- Surface 6: - Fire barrier flame retardant
- Surface 7: - None

The amount of fire retardant agent in each resin formulation was 30% wt.

In another embodiment of the invention the two surfaces of facing sheet or ply 1 will have phenolic resin/intumescent fire retardant agent formulations. On the outermost surface of sheet or ply 2, ie. surface 6, one could have a phenolic/fire-barrier formulation while the innermost surface 7 on sheet 6 may be a layer of phenolic adhesive containing thermoplastic resin.

The invention is illustrated by the following Examples.

### EXAMPLES

### Example 1

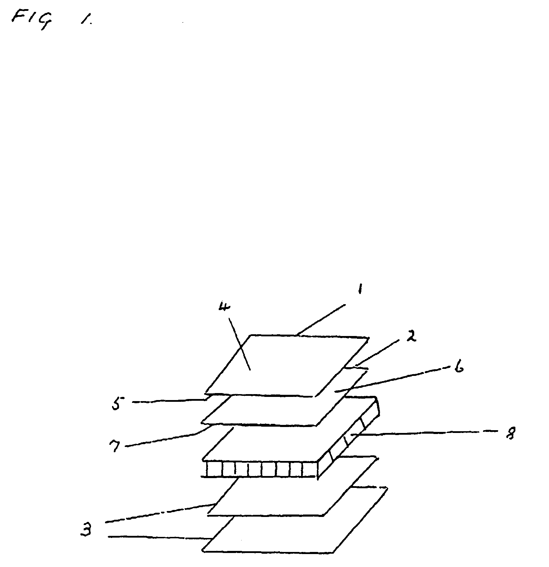

A series of panels having the structure shown in Figure 1 were constructed having symmetrical and asymmetrical layers in the prepregs. The central core was of an aramid material expanded into hexagonal cellular form. The prepreg layers were formed from fibers of fiberglas (eg. style 7781). The layers comprise resin matrix with different flame-retardants. The flame retardants are situated in different layers. The resin used is a thermoset phenol formaldehyde resin. The flame retardants used in the different layers are:
a) Ammonium polyphosphate-intumescent flame retardants: Exolit (Registered Trademark) AP 750, AP 423, AP 422 and AP 462 Used in surfaces 4 and 5
b) Ceepree (Registered Trademark): A blend of glass frits used in surface 6.

AP 422 and AP 423 are suitable as an "acid donor" for intumescent formulations. Exolit AP 750 develops its effectiveness through phosphorous/nitrogen synergism. Ceepree is a blend of glass frits from different industries in a near white powder form which acts as a fire barrier filler.

Surface 7 is a "pseudo" phenolic adhesive based on a thermoset phenol formaldehyde resin and a certain amount of thermoplastic.

Table 1 relates to panels involving different resin systems with specified coating applications in gsm. In the Table are presented the climbing drum peel results (ASTM D1781-76). The best panels C and E have peel strengths respectively of 226 N/78mm and 232.5 N/76mm. These values have been achieved using a phenolic adhesive based on a resole phenolic and a low molecular weight thermoplastic.

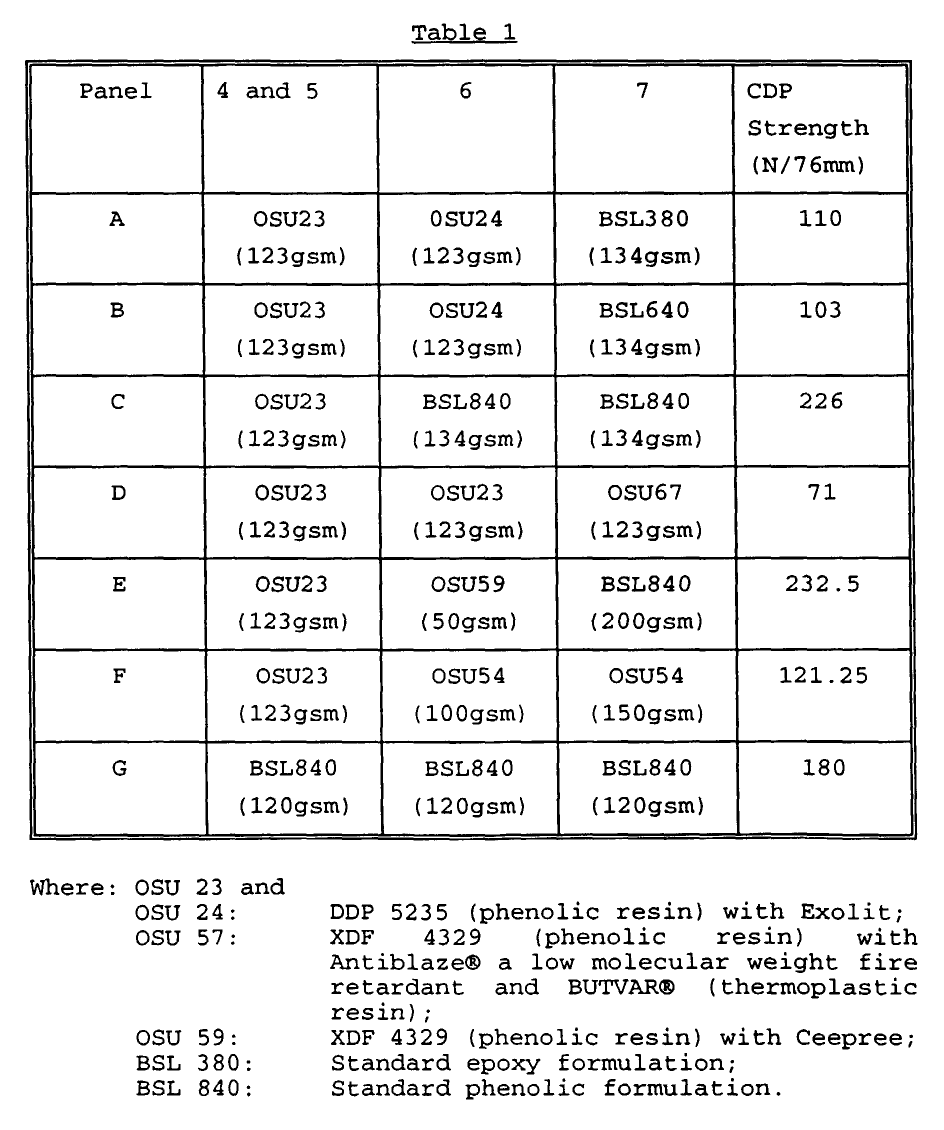

### 2. Fire Performance

The panels with the best peel ('C' and 'E') have been selected to be tested using the OSU. The results are presented in Table 2.

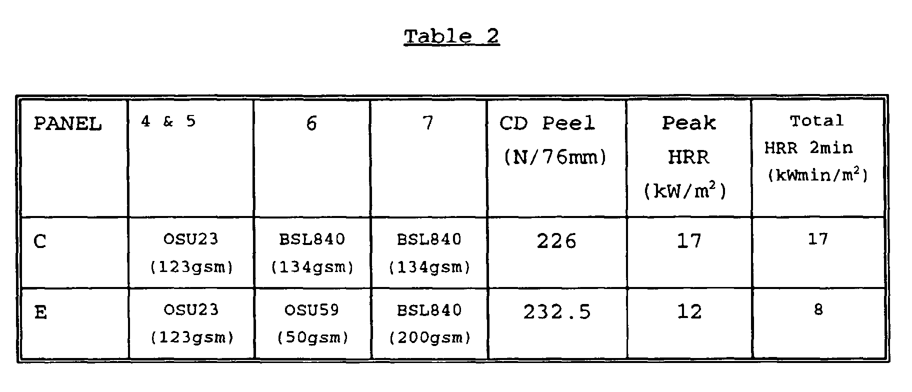

### Example 2

In this embodiment of the invention the weight of resin on each surface is the same, namely 120 gsm so that between the inner and outer skins there will be a total resin content of 240 gsm.

Otherwise the panels have the structure shown in Figure 1 comprising inner cores of aramid and pre-preg plies of fiberglas. The curing cycle, ie. curing temperature, curing time and ramp rate are set out in Table 3, the curing by steam press. The Table shows the effect of monitoring the influence of the curing cycle on the fire performance and climbing drum peel.

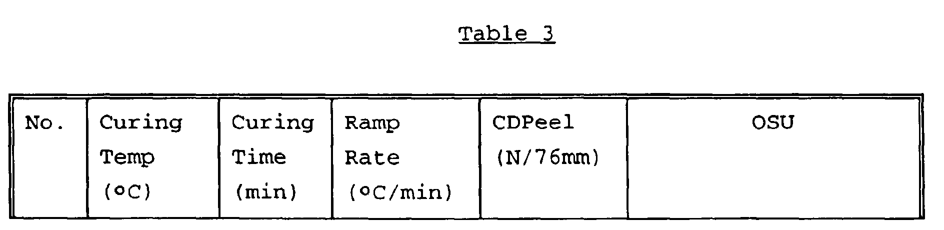

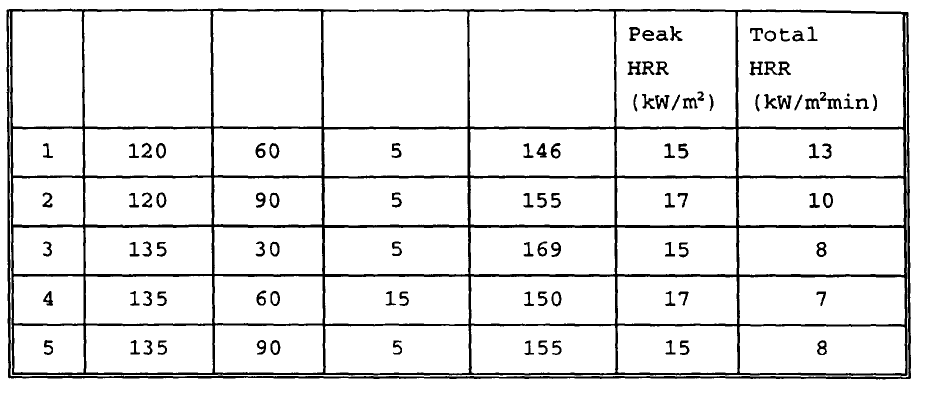

## Claims

1. A pre-preg ply which comprises a fibrous sheet impregnated with a thermosetting resin, a layer of a fire retardant material disposed adjacent to one surface of the sheet, and a layer of a second and different fire retardant material the bulk of which layer is distinguishable from the first fire retardant.

2. A pre-preg ply according to claim 1 wherein the first fire retardant material is an intumescent material and the second fire retardant is a fire-barrier material.

3. A pre-preg ply according to any one of claims 1 to 3 wherein the resin on one face of the pre-preg is in an amount (in grams per square meter (gsm)) greater than that on the other face and is free of fire retardant material.

4. A pre-preg ply according to either of claims 2 and 3 wherein the layer of intumescent fire retardant material is disposed over and adjacent to the surface of the pre-preg sheet and the fire barrier material is contained in a separate resin layer over the surface of the layer of intumescent material.

5. A pre-preg ply according to any one of claims 1 to 4 wherein the resin content is from 60 to 180 gsm.

6. A multiple ply laminate wherein at least one ply comprises a cured pre-preg ply according to any one of claims 1 to 5, the surface of the pre-preg ply bearing the fire resistant material being an outward layer of the laminate.

7. A composite panel structure which comprises in combination a cellular core sheet and on at least one side of said core sheet a ply derived from a ply according to any one of claims 1 to 5.

8. A composite panel structure according to claim 7 in which the core sheet is a honeycomb core sheet having a multiplicity of cells directed transverse to the panel structure.

9. A composite panel structure according to either one of claims 6 and 7 wherein the ratio of the amount of resin applied to the surface of the pre-preg ply adjacent to the core to the amount of resin on the other surface of the pre-preg ply is in the range 1.00 to 3.00 and the structure achieves in the Ohio State University (OSU) heat release test a value not exceeding 20/20 units.

10. A composite panel structure according to any one of claims 7 to 9 which comprises an additional outer ply impregnated with adhesive and at least one of the layers of fire-retardant materials being deposed between the two plies, the layer of second fire retardant material being distinguishable from the layer of first fire retardant material.

11. A composite panel structure according to claim 10 wherein the innermost ply has on the outer surface a layer of fire barrier fire retardant and the outermost ply has on either or both surfaces a layer or layers of intumescent fire retardant providing that where the intumescent fire retardant is adjacent the fire barrier material the bulk of the intumescent material is in a distinguishable resin layer.

12. A composite panel structure which comprises in combination a porous core sheet material and on one face of the core a resin impregnated ply characterised in that the amount of resin between the ply and the core is an amount of resin which is greater than the amount of resin on the outer surface of the ply, the ratio of the amounts applied to the inner and outer surfaces being the range 1.00 to 3.00 and the structure achieving in the Ohio State University (OSU) heat release test a value not exceeding 20/20 units.

13. A pre-preg or a laminate or panel structure according to any one of claims 1 to 12 characterised in that the resin is a thermoset phenol formaldehyde resin.

14. A structure according to claim 13 characterised in that the phenol formaldehyde resins are novolac or resole resins.

15. A structure according to any one of claims 12 and 14 characterised in that the resin is a combination of a thermoset phenolic resin and a thermoplastic resin soluble in the phenol formaldehyde resin.

16. A method of forming a laminate structure which comprises applying to centre core sheet a pre-preg ply in which the inner surface comprises a thermosetting resin containing dissolved therein a thermoplastic resin, the resin content being greater than the amount on the other surface of the ply in grams per square meter (gsm), the ratio of the two amounts being in the range 1.00 to 3.00, there being provided on the outermost surface of the ply two different fire retardant materials in structurally distinguishable layers.

17. A method according to claim 16 wherein the center of the laminate is a porous core.

18. A method according to claim 16 wherein the center of the laminate is a honeycomb core sheet having a multiplicity of cells directed transverse to said panel structure.

19. A method according to any one of claims 16 to 18 wherein the outer surface of the ply has disposed thereover a fire barrier material and there is applied to said surface a resin film containing an intumescent fire retardant material.
